# EUROPÄISCHE PATENTANMELDUNG

(11) **EP 0 640 638 A2**
(43) Veröffentlichungstag der Anmeldung: **01.03.1995**
(21) Anmeldenummer: 94112736.7
(22) Anmeldetag: 16.08.1994
(51) Int. Cl.: C08G 63/692, C08G 63/695, D01F 6/84

(54) **Pillarm und schwer entflammbar modifizierte Polyester, Verfahren zu ihrer Herstellung und daraus geformte Gebilde**

(30) Priorität: 27.08.1993 DE 4328800
(71) Anmelder: HOECHST AKTIENGESELLSCHAFT, D-65929 Frankfurt am Main (DE)
(72) Erfinder: Freudenberger, Volker, Dr., D-65719 Hofheim (DE); Klein, Peter, Dr., D-65205 Wiesbaden (DE); Kleiner, Hans-Jerg, Dr., D-61476 Kronberg (DE)

(57) **Zusammenfassung**

Beschrieben werden pillarm und schwer entflammbar modifizierte, lineare, faserbildende Polyester, aus Dicarbonsäure- und Diolkomponenten, die in ihrer Polymerkette Modifizierungsbausteine enthalten, die durch Umesterungs- oder Veresterungsreaktion aus Verbindungen der Formeln I und/oder II und/oder III entstehen, 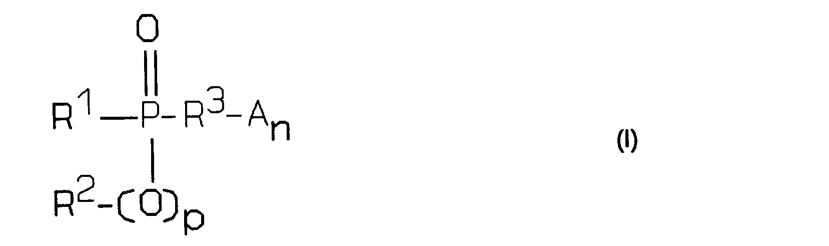 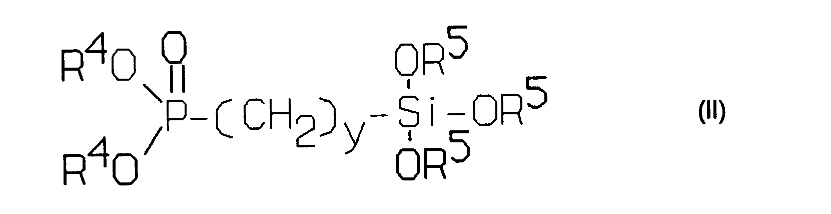 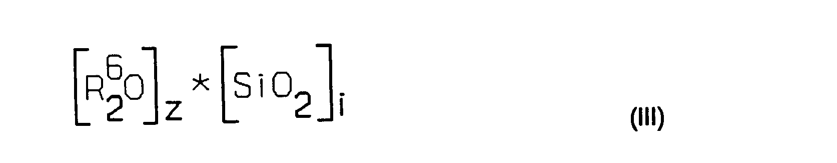 worin R¹ und R² gleich oder verschieden und jeweils einen einbindigen aliphatischen, araliphatischen oder aromatischen Kohlenwasserstoffrest mit 1 bis 12 C-Atomen oder R¹ und R² gemeinsam einen zweibindigen aliphatischen, araliphatischen oder aromatischen Rest bedeuten,
R³ für einen (n + 1)-valenten organischen Rest steht,
A steht für eine zur Esterbildung befähigte Gruppe, n für eine der ganzen Zahlen 1 bis 3,
R⁴ und R⁵ gleich oder verschieden sind und jeweils Wasserstoff oder einen einbindigen aliphatischen, araliphatischen oder aromatischen Kohlenwasserstoffrest mit 1 bis 12 C-Atomen bedeuten,
y eine ganze Zahl von 1 bis 10 ist,
R⁶ Wasserstoff oder einen einbindigen aliphatischen, araliphatischen oder aromatischen Kohlenwasserstoffrest mit 1 bis 12 C-Atomen bedeutet und der Index z 0 oder eine ganze Zahl von 1 bis 2^{*}i und der Index i eine ausreichend kleine ganze Zahl ist.
Ferner werden Verfahren zur Herstellung dieser Polyester und deren Verwendung beschrieben.

## Beschreibung

Die vorliegende Erfindung betrifft modifizierte synthetische lineare faserbildende Polyester mit verbessertem Brand- und Pillverhalten, Verfahren zu ihrer Herstellung sowie daraus geformte Gebilde, insbesondere pillarme und schwer entflammbare Fasern aus diesen Polyestern.

Fasern aus den üblichen synthetischen linearen faser- und filmbildenden Polyestern, vor allem diejenigen der Terephthalsäure, wie Polyethylenterephthalat, Polybutylenterephthalat und deren Copolyester sind von Haus aus für die meisten Einsatzgebiete ausreichend schwerentflammbar. Auf einigen Sektoren entspricht dieses inhärente Brandverhalten aber nicht den Anforderungen. Es hat daher nicht an Versuchen gefehlt, die Brennbarkeit von Polyestertasern z.B. durch nachträgliches Ausrüsten am fertigen Textil, durch Zumischen von Brandschutzkomponenten zur Polyesterschmelze oder durch eine chemische Modifizierung des Polyestermoleküls zu verbessern. Für die chemische Modifizierung sind mannigfaltige Vorschläge gemacht worden, von denen sich letztlich aber nur die Modifizierung mit in das Polyestermolekül einbaubaren Phosphorverbindungen in der Praxis durchgesetzt hat.

Solche Phosphorverbindungen sind z.B. in den Patentschriften DPS 2 346 787, DPS 2 646 218 und JPS 5 2144-627 aufgeführt. Fasern aus diesen schwerentflammbaren, linearen Polyestern sind selbstverlöschend und erfüllen die von verschiedenen Ländern für den textilen Brandschutz erlassenen Brandnormen.

Als gewisser Nachteil, zumal im Bereich feinerer Titer, ist bei diesen Fasern aber anzusehen, daß das Pillverhalten daraus hergestellter Gewebe nicht zufriedenstellt.

Bekannt ist, daß man das Pilling bei synthetischen linearen Polyestern durch eine Modifizierung mit Si-O-C-Gruppen enthaltenden Komponenten positiv beeinflussen kann. Beispiele für solche Modifizierungen sind u.a. beschrieben in den DPS 1 237 727, 1 720 647 oder 4 111 066. Derartige Modifizierungskomponenten bewirken zum einen eine für das Spinnverhalten wichtige, im Vergleich zu einem Polyester gleicher Lösungsviskosität deutliche Erhöhung der Schmelzviskosität und zum anderen die Möglichkeit durch hydrolytische Spaltung von Si-O-C-Bindungen an dem fertigen Textil die gewünschte Antipillwirkung zu erzielen.

Versucht man nun synthetische lineare Polyester nach DPS 1 720 647 mit dem Trimethoxysilanphosphonsäurediäthylester und nach DPS 2 346 787 mit der 2-Carboryethyl-methylphophinsäure gleichzeitig zu modifizieren, um durch eine einfache Kombination beider Komponenten einen Rohstoff für eine pillarme und schwerentflammbare Faser zu erhalten, so scheitert das Vorhaben, weil die für die Antipillwirkung notwendigen Si-O-C-Bindungen schon durch die dem Spinnen vorgeschaltete Trocknung unter gleichzeitiger Verminderung der für das Spinn- und Streckverhalten wichtigen Schmelzviskosität brechen und für die anschließende Antipillbehandlung nicht mehr zur Verfügung stehen. Die gleiche Erfahrung macht man, wenn anstelle des Trimethoxysilanphosphonsäurediäthylesters ein Tetra-alkylorthosilikat verwendet wird.

Auch die in der USP 5,180,793 beschriebene Verspinnung einer Rohstoffmischung, bei der jede der einzelnen Komponenten separat polykondensiert und dann in Mischung versponnen wird, hat bisher nicht zu einer technischen Realisierung geführt, weil sie einerseits aufwendiger ist als die Herstellung eines einzigen modifizierten Polyesters und es sich andererseits gezeigt hat, daß sich durch die dort offenbarten Modifizierungsmittel die von Haus aus schon vorhandene Hydrolyseempfindlichkeit der Grundkomponenten noch einmal drastisch erhöht, was einen aufwendigen Verarbeitungsprozeß unumgänglich macht.

Es war daher wünschenswert und es bestand die Aufgabe, nach Möglichkeiten zu suchen, eine schwerentflammbare PET-Faser mit guten Pilleigenschaften herzustellen.

Diese Aufgabe wurde durch die vorliegende Erfindung gelöst; denn überaschenderweise wurde nun gefunden, daß die Herstellung pillarmer, schwerentflammbarer Fasern möglich wird, wenn man synthetische lineare Polyester mit Phosphorverbindungen der allgemeinen Formel (I) und Si-O-C-Bindungen enthaltenden Verbindungen der allgemeinen Formeln (11) oder (111) gemeinsam modifiziert.

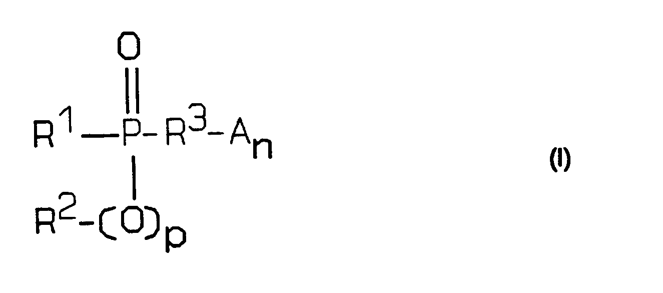

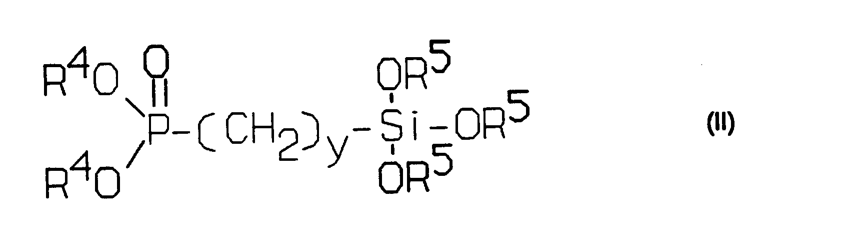

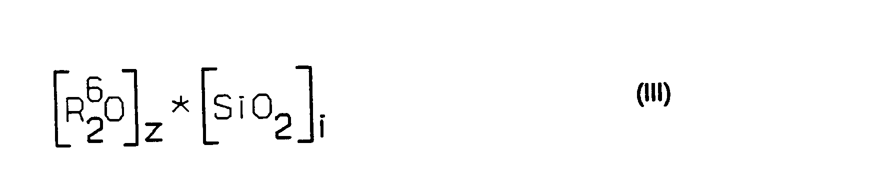

Ein Gegenstand der vorliegenden Erfindung ist somit ein pillarmer und schwer entflammbarer linearer faserbildender Polyester, aus Dicarbonsäure- und Diolkomponenten, der in seiner Polymerkette Modifizierungsbausteine enthält, die durch Umesterungs- oder Veresterungsreation aus den oben genannten Verbindungen der Formeln I und/oder II und/oder III entstehen.

Der Anteil der Modifizierungsbausteine in der Polyesterkette ist so bemessen, daß der Phosphorgehalt des Polyesters vorzugsweise 0,1 bis 2,5, insbesondere 0,3 bis 1,5 Gew.-%, der Siliziumgehalt vorzugsweise 0,01 bis 0,5, insbesondere 0,02 bis 0,2 Gew.-% beträgt.

In der allgemeinen Formel 1 sind R¹ und R² gleich oder verschieden und bedeuten jeweils einen einbindigen aliphatischen, araliphatischen oder aromatischen Kohlenwasserstoffrest mit 1 bis 12, vorzugsweise 1 bis 6, C-Atomen.

Weiterhin können die Reste R¹ und R² gemeinsam einen zweibindigen aliphatischen, araliphatischen oder aromatischen Rest bilden.

Zweibindige aliphatische Reste, für die R¹ und R² gemeinsam stehen, haben 3 bis 10, vorzugsweise 3 bis 6, C-Atome, wobei die beiden zum Phosphor oder zu dem an Phosphor gebundenen Sauerstoff gerichteten Bindungen vorzugsweise in 1,3-, 1,4-, 1,5- oder 1,6-Stellung stehen.

Beispiele für derartige aliphatische Reste sind Propan-1,3-diyl, Butan-1,3- oder 1,4-diyl, Hexan-1,3-, 1,4-, 1,5- oder 1,6-diyl.

Zweibindige araliphatische oder aromatische Reste, für die R¹ und R² gemeinsam stehen, können einen Ring oder 2 bis 3 miteinander kondensierte oder nicht kondensierte aromatische Ringe haben und weisen insgesamt 7 bis 20 C-Atome, vorzugsweise 7 bis 14, insbesondere 7 bis 12 C-Atome auf.

Beispiele für solche Reste sind 1-Methylen-phen-2-yl, Naphthalin-1,8-diyl, und der bevorzugte Rest Biphenyl-2,2'-diyl.

R³ steht für einen (n + 1 )-valenten organischen Rest, vorzugsweise einen (n + 1 )-valenten gesättigten aliphatischen Kohlenwasserstoffrest mit 1 bis 12, vorzugsweise 1 bis 6, insbesondere 2 bis 4 C-Atomen, einen araliphatischen Kohlenwasserstoffrest mit 7 bis 16, vorzugsweise 7 bis 14, insbesondere 8 bis 14 C-Atomen oder einen aromatischen Kohlenwasserstoffrest mit 6 bis 16, vorzugsweise 6 bis 10 C-Atomen.

A steht für eine zur Esterbildung befähigte Gruppe, n für eine der ganzen Zahlen 1 bis 3, vorzugsweise 2, und p für 0 oder 1.

Eine zur Esterbildung befähigte Gruppe im Sinne dieser Beschreibung ist vorzugsweise eine -COR^{7 -} Gruppe, wobei R⁷ für -OH, -CI, -Br oder -OR^{$} steht und R⁸ vorzugsweise einen Alkylrest, insbesondere einen unverzweigten Alkylrest mit 1 bis 6, insbesondere 1 bis 3 C-Atomen, oder einen entsprechend langen Hydroryalkylrest bedeutet.

Im Fall, daß n den bevorzugten Wert von 2 oder den Wert 3 hat, können zwei der Reste A auch gemeinsam eine Gruppe -CO-O-CO- bilden.

Besonders bevorzugt als zur Esterbildung befähigte Gruppen sind freie Carboxylgruppen und Methoxy-oder Ethoxycarbonylgruppen.

A kann jedoch auch für eine Hydroxy- oder eine Acyloxygruppe stehen wobei der Acylrest sich vorzugsweise von einer niederen aliphatischen Carbonsäure mit insgesamt 1 bis 5, insbesondere mit 1 oder 2 C-Atomen ableitet.

Beispiele für das Strukturelement -R³-Aₙ sind 2-Carboxy-ethy-1-yl, Dicarboxymethyl, 1,1'-Dicarboxy-eth-2-yl, 1,2-Dicarboxy-eth-2-yl, 2,3-Dicarboxy-prop-1-yl, 3,5-Dicarboxy-phen-1-yl sowie die entsprechenden Niederalkylester und Anhydride.

OH-funktionelle zur Esterbildung befähigte Strukturelemente sind beispielsweise 1,4-Dihydroxy-but-3-yl oder 1,2-Di-(4-acetyloxyphenyl)-eth-2-yl.

In der allgemeinen Formel 11 sind R⁴ und R⁵ gleich oder verschieden und bedeuten jeweils Wasserstoff oder, bevorzugt einen einbindigen aliphatischen, araliphatischen oder aromatischen Kohlenwasserstoffrest mit 1 bis 12, vorzugsweise 1 bis 6, C-Atomen.

Auch die beiden in der Verbindung der Formel 11 enthaltenen Reste R⁴ können untereinander verschieden im Rahmen der oben angegebenen Definition sein.

Bevorzugt, schon aus Gründen der einfacheren Herstellung, ist es, daß die beiden Reste R⁴ gleich sind. Das Gleiche gilt für die in der Verbindung der Formel 11 enthaltenen drei R⁵⁻Reste.

Auch diese können prinzipiell im Rahmen der obigen Definition untereinander verschieden sein, sind aber vorzugsweise gleich.

y in der Formel II ist eine ganze Zahl mit einem Wert von 1 bis 10, vorzugsweise von 2 bis 4.

In der Formel III bedeutet R⁶ Wasserstoff oder, vorzugsweise einen einbindigen aliphatischen, araliphatischen oder aromatischen Kohlenwasserstoffrest mit 1 bis 12, insbesondere 1 bis 6, C-Atomen. Beispiele für Reste R⁶ sind Methyl, Ethyl, n-, iso- oder tert-Butyl oder Octyl.

Die 2·z Reste R⁶, die in der Verbindung der Formel III enthalten sind, können untereinander verschieden im Rahmen der oben angegebenen Definition sein.

Bevorzugt, schon aus Gründen der einfacheren Herstellung, ist es, daß die Reste R⁶ gleich sind.

Der Index z in Formel III ist eine ganze Zahl von 0 bis 2·i.

Der Index i in Formel III ist eine ganze Zahl, deren Wert wesentlich die Teilchengröße von Kolloiden der Substanz der Formel III bestimmt. Der Wert von i wird ausreichend klein eingestellt, sodaß die Teilchengröße der Substanz unter 2·10⁻⁵ mm liegt.

Substanzen der Formel III sind in der Regel für die Modifizierung der erfindungsgemäßen Polyester geeignet, wenn i im Bereich von 1 bis 20, vorzugsweise von 1 bis 5 liegt.

Beispiele für bekannte Substanzen der Formel 111, die sich für die Herstellung erfindungsgemäßer Polyester eignen, sind kolloidales Siliziumdioxid, Siliziumdioxidorganosole, Kieselsäuren verschiedener Hydratationsstufen (R⁶ = Wasserstoff; z = 1; i eine Zahl von 1 bis 5) und deren Alkylester worin R⁶ dann Alkyl mit 1 bis 8, vorzugsweise 1 bis 4 C-Atomen, wie z.B. Tetraethyl-orthosilikat.

Eine bevorzugte Gruppe von Verbindungen der Formel III sind solche, bei denen das Molverhältnis z:i Werte von 2:1 bis 1:2 hat. Besonders bevorzugt sind Verbindungen mit z:i = 2:1 bis 1:1, wozu auch das oben bereits genannte Tetraethyl-orthosilikat zählt.

Aromatische Reste, für die die Symbole R¹ bis R⁵ stehen oder die in Baugruppen, für die R¹ bis R⁵ stehen, enthalten sind, können bis zu 4, vorzugsweise 0 bis 2, weitere Substituenten tragen wie z.B. Halogene, insbesondere Chlor oder Brom, oder Alkyl- oder Alkoxyreste mit 1 bis 10, vorzugsweise 1 bis 4, insbesondere 1 bis 2 C-Atomen.

Die Polyesterketten, die die aus den genannten Modifizierungsmitteln I, II und III entstehenden Baugruppen enthalten, bestehen im übrigen aus den in bekannten faserbildenden Polyestern üblichen Baugruppen.

Überwiegend, d.h. zu mindestens 80 Mol.-%, bestehen sie aus Bausteinen, die sich von aromatischen Dicarbonsäuren und von aliphatischen Diolen ableiten. Gängige aromatische Dicarbonsäurebausteine leiten sich von Benzoldicarbonsäuren, insbesondere der Terephthalsäure und der Isophthalsäure ab; gängige Diole haben 2-4 C-Atome, wobei das Ethylenglycol besonders geeignet ist. Vorzugsweise enthalten die erfindungsgemäßen modifizierten Polyester mindestens 80 Mol% Ethylenterephthalat-Einheiten. Die restlichen 20 Mol% bauen sich dann aus Dicarbonsäureeinheiten und/oder Glycoleinheiten auf, die als sogenannte Modifizierungsmittel wirken und die es dem Fachmann gestatten, die physikalischen und chemischen Eigenschaften der hergestellten Filamente gezielt zu beeinflussen.

Solche Dicarbonsäureeinheiten leiten sich beispielsweise von der Isophthalsäure oder von aliphatischen Dicarbonsäure wie z.B. Glutarsäure, Adipinsäure oder Sebazinsäure ab. Beispiele für modifizierend wirkende Diolreste sind solche von längerkettigen Diolen, z.B. von Propandiol oder Butandiol, von Di- oder Triethylenglycol oder, sofern in geringer Menge vorhanden, von Polyglycol mit einem Molgewicht von ca. 500 - 2000.

Im einzelnen sind Polyester bevorzugt, deren Polymerketten aus 0 bis 100 Mol.-% Baugruppen der Formel IV 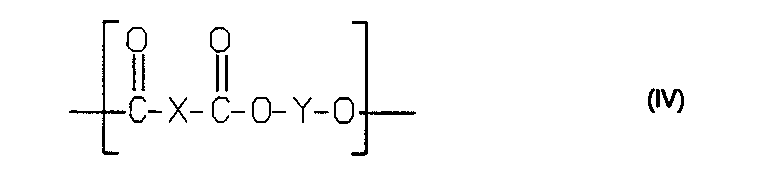 und 100 bis 0 Mol.-% Baugruppen der Formel V 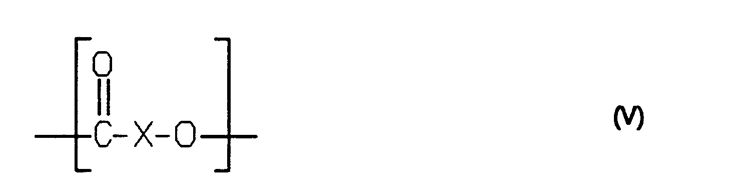 aufgebaut sind, worin
X zu mehr als 80 Mol.-% aus aromatischen Resten mit 5 bis 16, vorzugsweise 6 bis 12 C-Atomen und zu maximal 20 Mol.-% aus aliphatischen Resten mit 4 bis 10 Kohlenstoffatomen, vorzugsweise 6 bis 8 Kohlenstoffatomen,
Y zu mindestens 80 Mol.-% aus Alkylen- oder Polymethylengruppen mit 2 bis 4 Kohlenstoffatomen oder Cycloalkan- oder Dimethylen-cycloalkangruppen mit 6 bis 10 C-Atomen und
zu maximal 20 Mol.-% aus geradkettigen oder verzweigten Alkandiyl-Gruppen mit 4 bis 16, vorzugsweise 4 bis 8, C-Atomen oder aus
Resten der Formel -(C₂H₄-0)ₘ-C₂H₄-, worin m eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, oder aus Resten der Formel -(CH₂)q-O-(CH₂)q-,
worin
   Q für O oder S (ein Sauerstoff- oder Schwefelatom) steht, wobei q eine ganze Zahl von 2 bis 8 bedeutet oder
   Q Cycloalkan-diyl, oder ein ein- oder zweikerniger kondensierter oder nicht kondensierter aromatischer Rest, insbesondere Penylen oder eine Rest der unten angegebenen Formel VI ist, wobei q eine ganze Zahl von 0 bis 8 ist, bestehen.

Zweiwertige, Ethergruppen enthaltende Reste, für die Q steht sind solche, die sich von Diglykol, Triglykol oder Polyglykol mit einem mittleren Molekulargewicht von ca. 500 bis 2000 ableiten.

Beispiele für cycloaliphatische oder aromatische Reste für die Q steht sind Cyclohexan-1,4-diyl, 1,4-Dimethylen-cyclohexan, 1,3- oder 1,4-Phenylen, sowie die Reste -Phenylen-O-Phenylen- , -Phenylen-S-Phenylen- oder -Phenylen-S0₂-Phenylen- .

Zweckmäßigerweise haben die erfindungsgemäßen Polyester eine relative Viskosität von 1,2 bis 1,9, vorzugsweise von 1,4 bis 1,8, gemessen in einer 1 gew.-%igen Lösung der Polyester in einer Mischung von o- und m-Kresol im Gewichtsverhältnis 10:1 bei 25 °C.

Vorzugsweise enthalten Polyester, die Baugruppen der Formel V aufweisen, 70 bis 100 Mol.-% ,insbesondere 85 bis 100 Mol.-%, Baugruppen der Formel IV und 0 bis 30 Mol.-%, insbesondere 0 bis 15 Mol.-%, Baugruppen der Formel V.

Die aromatischen Reste, für die X steht, können im Rahmen der gegebenen Definition alle gleich sein, oder sie können verschieden sein.

Insbesondere können die oben genannten, von X repräsentierten Baugruppen, die zu mindestens 80 Mol.- % die Polyesterkette bilden, einzeln oder gemischt in der Polyesterkette vorliegen. Bevorzugt ist es, wenn die mindestens 80 Mol.-% der Polyesterkette von nur einem oder zwei Individuen aus der Gruppe der für diese Hauptkomponenten angegebenen Reste gebildet werden.

Eine eventuell gewünschte weitere Modifizierung der Polyesterkette erfolgt dann vorzugsweise durch andere Baugruppen im Rahmen der Definition, die für die zu maximal 20 Mol.-% vorhandenen, von X repräsentierten Baugruppen gegeben worden ist.

So können die mindestens 80 Mol.-% aromatischen Reste X beispielsweise alle 1,4-Phenylenreste sein oder sie können sich beispielsweise im Molverhältnis von 4:6 bis 6:4 aus 2,6-Naphylenresten und Biphenyl-4,4'-diyl-Resten zusammensetzen.

Bevorzugt sind Polyester, in denen X mindestens 95 Mol.-% aromatische und maximal 5 Mol.-% aliphatische Reste bedeuten, insbesondere aber solche, in denen X ausschließlich für aromatische Reste steht.

Auch die Reste, für die Y steht, können im Rahmen der gegebenen Definition alle gleich sein, oder sie können verschieden sein.

Insbesondere können die oben genannten, von Y repräsentierten Baugruppen, die zu mindestens 80 Mol.- % die Polyesterkette bilden, einzeln oder gemischt in der Polyesterkette vorliegen. Bevorzugt ist es, wenn die mindestens 80 Mol.-% der Polyesterkette von nur einem oder zwei Individuen aus der Gruppe der für diese Hauptkomponenten angegebenen Reste gebildet werden.

Eine eventuell gewünschte weitere Modifizierung der Polyesterkette erfolgt dann vorzugsweise durch andere Baugruppen im Rahmen der Definition, die für die zu maximal 20 Mol.-% vorhandenen, von Y repräsentierten Baugruppen gegeben worden ist.

So können die mindestens 80 Mol.-% aliphatischen Reste Y beispielsweise alle Ethylenreste sein oder sie können sich beispielsweise im Molverhältnis von 10:1 bis 1:10 aus Ethylen und 1,4-Dimethylen-cyclohexan-Resten zusammensetzen.

Besonders bevorzugt sind Polyester, in denen Y mindestens 95 Mol.-% Ethylen-Reste sind.

Bevorzugte aromatische Reste, für die X aber auch für Q stehen, sind 1,4- und 1,3-Phenylen, 1,4-, 1,5-, 1,8-, 2,6- und 2,7-Naphthylen, 4,4'-Biphenylen, Furylen und Reste der Formel VI 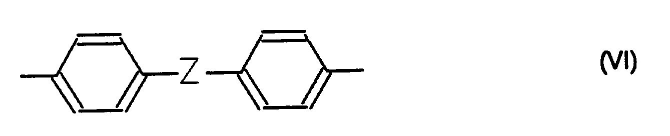 worin Z Polymethylen oder Alkylen mit 1 bis 4 Kohlenstoffatomen, -S0₂-, -COO-, -O- oder -S- bedeutet.

Die aromatischen Reste, für die X steht, können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie die längerkettigen, für Y stehenden Baugruppen werden insbesondere dann in die Polyesterkette eingebaut, wenn eine weitere Modifizierung der Eigenschaften des Polyesters erwünscht ist.

Bevorzugt sind Polyester, die weniger als 7 % dieser modifizierend wirkenden Komponenten enthalten.

Ein bevorzugter Polyester, der in seiner Kette die oben genannten Modifizierungsmittel der Formeln I bis 111 in den angegebenen Mengen enthält, ist ein solcher, der mindestens 90 Mol.-% Alkylenterephthalatbausteine der Formel VII 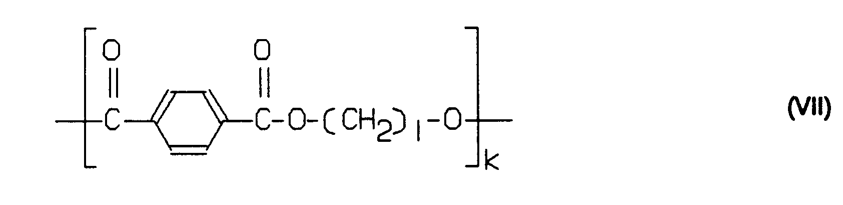 worin 1 eine Zahl von 2 bis 6 und k eine Zahl über 10 ist,

und bis zu 10 Mol.-% anderer Bausteine aus den oben genannten Gruppen aufweist und dadurch so modifiziert worden ist, daß bestimmte Gebrauchseigenschaften erhalten werden. Als Beispiel sei genannt Polyethylenterephthalat, das durch Einbau von Sulfogruppen enthaltenden Bausteinen (z.B. Sulfo-isophthalsäure) eine Affinität zu basischen Farbstoffen aufweist.

Ein weiterer Gegenstand der Erfindung ist ein Verfahren zur Herstellung der erfindungsgemäßen linearen faserbildenden Polyester.

Bei diesem Verfahren werden in an sich bekannter Weise Dicarbonsäuren und/oder Hydroxycarbonsäuren der Formeln IVa oder Va 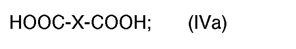 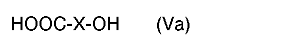 worin X die oben angegebenen Bedeutungen hat, oder deren niedere (vor allem C 1 bis C 4-) Alkylester wie Terephthalsäure oder Dimethylterephthalat mit Diolen der Formel IVb 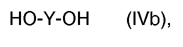 worin Y die oben angegebenen Bedeutungen hat, wie z.B. Ethylenglykol,

unter Zusatz von Verbindungen der oben angegebenen Verbindungen der Formeln I und/oder 111 und/oder 11 durch Direktveresterung bzw. Umesterung zur Reaktion gebracht und das Produkt dann auf bekannte Weise polykondensiert.

Der Zusatz der Verbindungen I und/oder 111 und/oder 11 erfolgt in einer solchen Menge, daß der Phosphorgehalt des Polyesters vorzugsweise 0,1 bis 2,5, insbesondere 0,3 bis 1,5 Gew.-%, und der Siliziumgehalt vorzugsweise 0,01 bis 0,5, insbesondere 0,02 bis 0,2 Gew.-% beträgt,

Bei der Durchführung des erfindingsgemäßen Verfahrens werden die gleichen Reaktionsbedingungen angewandt wie bei der Herstellung der entsprechenden unmodifizierten faser- und filmbildenden linearen Polyester. Es werden Dicarbonsäure oder deren niedere (vor allem C 1 bis C 4-) Alkylester wie Terephthalsäure oder Dimethylterephthalat mit Diolen wie Ethylenglykol durch Direktveresterung bzw. Umesterung zur Reaktion gebracht und das Produkt dann auf bekannte Weise polykondensiert.

Gemäß den obigen Definitionen von X und Y kommen außer Terephthalsäure auch andere zur Herstellung faser- und filmbildender Polyester geeignete Dicarbonsäuren oder Oxycarbonsäuren für die Herstellung der erfindinngsgemäßen Polyester in Frage; beispielhaft seien genannt: Isophthalsäure, 2,6-Naphthalindicarbonsäure, 4,4-'Diphenyldicarbonsäure, 4,4'-Diphenylsulfondicarbonsäure, p-Hydroxybenzoesäure. Die Dicarbonsäuren können allein oder ggf. in Mischung mit bis zu 20 Molprozent einer anderen aromatischen, aliphatischen oder cycloaliphatischen Dicarbon- oder Oxycarbonsäure wie z.B. die oben aufgeführten, Adipinsäure oder Sebacinsäure zur Anwendung kommen, bevorzugt ist die alleinige Verwendung von Terephthalsäure.

Als Diole können außer Ethylenglykol auch solche der oben definierten Formel HO(CH₂)q-Q-(CH₂)qOH, wobei q und Q die oben definierten Bedeutungen haben, verwendet werden. Als zur Herstellung der erfindungsgemäßen Polyester einsetzbaren Diole seien in beispielhafter Weise aufgeführt: 1,3-Propandiol, 1,4-Butandiol, 1,4-Cylcohexandimethanol, Diethylenglykol, Dihydroxy-diphenylether, Dihydroxy-diphenylsulfon. Die Diole können allein oder in Kombination miteinander eingesetzt werden, bevorzugt ist allerdings die Verwendung von mindestens 80 Mol.-% Ethylenglykol.

Für die Direktveresterung bzw. die Umesterung und die Polykondensation werden übliche Katalysatoren wie z.B. Manganacetat, Zinkacetat, Sb₂0₃, Ge0₂, oder Titansäureester eingesetzt.

Selbstverständlich können bei dem erfindungsgemäßen Verfahren neben den gängigen Katalysatoren auch alle üblichen Zusatzstoffe (wie z.B. Vernetzungs- Mattierungs, Stabilisierungsmittel, Farb- und Füllstoffe etc.) beigefügt werden.

Bei dem Veresterungs- bzw. dem Umesterungsverfahren kann der Zusatz der Phosphorverbindungen vor oder nach der Veresterungs- bzw. Umesterungsstufe erfolgen. Bei dem Umesterungsverfahren wird der Zusatz der Phosphorverbindungen in Form freier Dicarbonsäuren nach der Umesterungsstufe bevorzugt, weil bei Verwendung der entsprechenden Dicarbonsäureester eine deutliche Verlangsamung der Umesterungsreaktion verzeichnet wird. Die Zugabe der Si-O-C-Bindungen enthaltenden Produktewird beim Veresterungsverfahren zweckmäßigerweise während des Abtriebs von überschüssigem Glykol vorgenommen. Beim Umesterungsverfahren ist eine Zugabe vor oder nach der Umesterung möglich.

Die Erfindung besteht somit in der Herstellung von synthetischen linearen pillarmen und schwerentflammbaren Polyester-Rohstoffen und ihrer Verarbeitung zu geformten Gebilden insbesondere zu Fasern unter üblichen Bedingungen, wobei der synthetische lineare Polyester gleichzeitig mit einer Phosphorverbindung der allgemeinen Formel (I) und einer Si-O-C-Bindungen enthaltenden Verbindung der allgemeinen Formeln (11) oder (111) modifiziert wird. Im Gegensatz zu bekannten Modifizierungsarten gelingt es durch die erfindungsgemäße Modifizierung überraschenderweise, einen Polyesterrohstoff herzustellen, aus dem sich Fasermaterialien erspinnen lassen, die pillarm und gleichzeitig schwer entflammbar sind. Dies ist vermutlich darauf zurückzuführen, daß bei der Auswahl der oben definierten Polyesterzusammensetzung die Si-O-C-Bindungen bei der Verarbeitung des Polyesterrohstoffs erhalten bleiben und an der fertigen Faser durch eine Hydrolysebehandlung gespalten werden können. Dadurch werden die erfindungsgemäßen synthetischen schwerentflammbaren Polyesterfasern erhalten, die ein gutes Pillverhalten aufweisen.

Die Erfindung betrifft auch geformte Gebilde aus den erfindungsgemäßen, modifizierten Polyestern, die durch Extrusion von Schmelzen der Polyester hergestellt werden.

Derartige geformte Gebilde sind Formkörper, Folien, vor allem aber Fasermaterialien, insbesondere solchen für den textilen Einsatz.

Als Fasermaterialien im weiteren Sinn sind auch Pulpen zu verstehen, die durch andere als Extrusionsverfahren, z.B. durch Schleuderverfahren erhalten werden.

Bevorzugte Fasermaterialien sind aber die durch bekannte Spinnverfahren erhaltenen. Diese Fasermaterialien können in Form von Endlosfasern (Filamenten) oder Stapelfasern und in allen daraus folgenden Verarbeitungszuständen, wie z.B. Filamentgarnen, Tau, Sliver, Flocke, Stapelfasergarn vorliegen und die Fasern bzw. Filamente können hoch- oder niederorientiert, verstreckt oder unverstreckt und texturiert oder glatt sein.

Die Fasertiter liegen für den bevorzugten Textilen Einsatz im Bereich von 0,5 bis 15, vorzugsweise 0,5 bis 7 dtex, können aber für spezielle Aufgaben, z.B. für Verstärkungs- oder Versteifungsainfgaben auch erheblich über 15 dtex liegen, z.B. in den Titerbereich der sog. Drähte fallen.

Wie üblich können die verschiedenen Orientierungszustände und damit verbunden die Festigkeit und die Reißdehnung der Fasermaterialien in an sich bekannter Weise durch Wahl der Spinngeschwindigkeit und der eventuell nachgeschalteten Verstreckung dem geplanten Verwendungszweck angepaßt werden.

Die Texturierung kann wie üblich z.B. durch Stauchkammerkräuselung durch Lufttexturierung in Blasdüsen, durch das Falschdrahtverfahren oder durch kombinierte Strecktexturierung erfolgen.

In Garnen und Garnerzeugnissen wie Geweben, Gewirken oder Gestricken sowie in Fasermaterialien wie z.B. Vliesen können die erfindungsgemäßen Fasern in reiner Form vorliegen oder soweit mit anderen bekannten Fasern abgemischt sein, daß die Gegenstände noch eine aus den erfindungsgemäßen Fasermaterialien resultierende, signifikante Verbesserung des Pill- und Brandverhaltens haben.

Der Erfindungsgegenstand wird nun - ohne den Erfindungsrahmen einzuschränken - an nachfolgenden Beispielen näher erläutert.

Die angegebenen Gewichtsanteile sind Mengenprozent; Molprozentangaben für die Zusammensetzung von X bzw. von Y beziehen sich jeweils auf die Gesamtheit der X-Reste = 100 Mol.-% bzw. auf die Gesamtheit der Y-Reste = 100 Mol.-%

Die zur Charakterisierung herangezogenen Kenngrößen der in den Beispielen beschriebenen Polyester und der daraus hergestellten Fasern werden wie folgt bestimmt:
Die DSC-Messungen sind mit dem Mettler Calorimeter TA 3000 bei Aufheizraten von 20°/min durchgeführt. Die relativen Viskositäten sind an 1 gew.-%igen Lösungen in einem 10:1-Gemisch aus o- und m-Kresol bei 25 bestimmt.
Zur Hydrolysebehandlung wurden die Fasern 10 Stunden in entsalztem Wasser ohne Zusatz eines Hilfsmittels gekocht. Danach erfolgte die Bestimmung von Reißkraft und rel. Viskosität.
Für den Brenntest wird die französische Brandnorm "brüleur electrique" NFP 92-503 mit einer Einteilung in sechs Brandklassen von MO (unbrennbar) bis M5 (sehr leicht entflammbar) herangezogen.
Die Bestimmung der Knickbruchtourenzahl erfolgt nach K. H. Grünewald, Chemiefasern Bd.12, S. 853-(1962). In dieser Literaturstelle wird die Knickbruchtourenzahl als ein Maßstab für die Biegescheuerfestigkeit einer Faser beschrieben, der gut zur Beurteilung der Pillarmut herangezogen werden kann.

Nach dieser Methode bestimmte Knickbruchtourenzahlen liegen gemäß den Angaben in DE-A-1 720 647 für normale Polyethylenterephthalatfasern bei 3000 bis 3500, für pillarme Faser dagegen deutlich unter 1000, beispielsweise bei etwa 400.

### Beispiel 1

In einem Rührgefäß mit Kolonne und Rückflußkühler werden 1000 g Dimethylterephthalat (DMT) und 600 ml Ethylenglykol (Glykol) mit 330 mg Manganacetat unter Zusatz von 2,5 g (0,25 %) Tetraethylorthoslikat (TES) ca. 3 Stunden auf 150-220 erhitzt bis die Methanolabspaltung beendet ist. Danach werden 47 g (4,7%) Dimethylphosphinyl-methylbernsteinsäure ca. 30 Minuten bei 220-230 bis zur vollständigen Wasserabspaltung eingeestert. Nach Einrühren von 120 mg H₃P0₃, 100 mg Sb₂0₃ und 0,04 % Ti0₂ wird die Temperatur im Laufe einer Stunde auf 280° gesteigert und der Druck auf 0,1 bis 0,5 mbar abgesenkt. Die unter Abspaltung von Glykol verlaufende Polykondensation wird unter diesen Bedingungen im Laufe von ca. zwei Stunden zu Ende geführt.

Man erhält ein hellfarbenes Polymer,mit einem Tg von 68°, einem Tₖ von 195° und einem Tₛ von 244°, das einen P-Gehalt von 0,6 % und eine rel. Viskosität von 1,70 besitzt.

Das 8 Sunden bei 150 und 15 mbar getrocknete Produkt wird bei 280 und einem Abzug von 1000 m/min versponnen. Die mit einem Streckverhältnis von 1 : 3,62 nach üblichen Methoden verstreckten Fäden besitzen folgende Eigenschaften:
Reißkraft: 20 cN/tex
Reißdehnung: 18,5 %
Reißkraft nach Hydrolyse: 18 cN/tex
rel. Viskosität nach Hydrolyse: 1,49
Knickbruchtourenzahl: 610
Brenntest: M1

### Vergleichsbeispiel 1

Beispiel 1 wird wiederholt, jedoch ohne Zusatz von TES. Es wird unter identischen Bedingungen - also bis zur gleichen Schmelzviskosität - polykondensiert. Das resultierende Polymer weist eine Tg von 77°, eine Tₖ von 193°, eine Tₛ von 247° und einen Phosphorgehalt von 0,6 % sowie eine rel. Viskosität von 1,75 auf. Die daraus erhaltenen Fasern besitzen nachfolgende Eigenschaften:
Reißkraft: 29 cN/tex
Reißdehnung: 24,5
Reißkraft nach Hydrolyse: 28 cN/tex
rel. Viskosität nach Hydrolyse: 1,69
Knickbruchtourenzahl: 2550
Brenntest: M1

### Beispiel 2

In einem Rührgefäß mit Kolonne und Rückflußkühler werden 1000 g DMT und 600 ml Glykol mit 330 mg Manganacetat unter Zusatz von 2,5 g (0,25 %) TES ca. 3 Stunden auf 150 - 220 erhitzt bis die Methanolabspaltung beendet ist. Danach werden 59 g (5,9 %) Diisoprpopylphosphinyl-methylbernsteinsäure ca. 30 min bei 220 - 230 bis zur volständigen Wasserabspaltung eingeestert. Nach Einrühren von 120 mg H₃PO₃, 100 mg Sb₂0₃ und 0,04 % Ti0₂ wird die Temperatur im Laufe einer Stunde auf 280° gesteigert und der Druck auf 0,1 bis 0,5 mbar abgesenkt. Die unter Abspaltung von Glykol verlaufende Polykondensation wird unter diesen Bedingungen im Laufe von ca. 2 Stunden zu Ende geführt.

Man erhält ein hellfarbenes Polymer, das einen P-Gehalt von 0,6 %, eine Tg von 72°, eine Tₖ von 188 und eine Tₛ von 244 sowie eine rel. Viskosität von 1,75 besitzt.

Das 8 Stunden bei 150° und ca. 15 mbar getrocknete Produkt wird bei 280° und einem Abzug von 1000 m/min versponnen. Die mit einem Streckverhältnis von 1 : 3,62 nach üblichen Methoden verstreckten Fäden besitzen folgende Eigenschaften:
Reißkraft: 22 cN/tex
Reißdehnung: 16,8 %
Reißkraft nach Hydrolyse: 20 cN/tex
rel. Viskosität nach Hydrolyse: 1,52
Knickbruchtourenzahl: 750
Brenntest: M1

### Beispiel 3

In einem Rührgefäß mit Kolonne und Rückflußkühler werden 2000 g DMT mit 1200 ml Glykol mit 660 mg Manganacetat unter Zusatz von 5 g (0,25 %) Tetraethylorthoslikat (TES) ca. 2 Stunden auf 160 -210 erhitzt bis die Methanolabspaltung beendet ist.

Danach werden 155 g (7,75%) (6H.Dibenz[c,e][1,2]oxaphosphorinoxid-6-ylmethyl)-bernsteinsäure 30 Minuten bei 220-230 ° eingeestert bis auch die Wasserabspaltung beendet ist. Nach Einrühren von 240 mg H₃PO₃, 200 mg Sb₂0₃ und 0,04 % Ti0₂ wird die Temperatur auf 280° gesteigert und der Druck im Laufe von 1,5 Stunden auf 0,1 bis 0,5 mbar abgesenkt. Die unter Abspaltung von Glykol verlaufende Polykondensation wird unter diesen Bedingungen dann im Laufe von ca. vier Stunden zu Ende geführt.

Man erhält ein hellfarbenes Polymer mit einem Tg von 80°, einem Tₖ von 156 und einem Tₛ von 249°, das einen P-Gehalt von 0,5 % und eine relative Viskosität von 1,78 besitzt.

Das 8 Stunden bei 150 und 15 mbar getrocknete Produkt wird bei 280 und einem Abzug von 1000 m/min versponnen. Die mit einem Steckverhältnis von 1 : 3,62 nach üblichen Methoden verstreckten Fasern besitzen folgende Eigenschaften:
Reißkraft: 22 cN/tex
Reißdehnung: 23 %
Reißkraft nach Hydrolyse: 20 cN/tex
rel. Viskosität nach Hydrolyse: 1,52
Knickbruchtourenzahl: 430
Brenntest: M1

### Vergleichsbeispiel 2

Beispiel 3 wird wiederholt, jedoch ohne den Zusatz von TES. Es wird unter identischen Bedingungen - also bis zur gleichen Schmelzviskosität polykondensiert, wonach die rel. Viskosität 1,81 beträgt und das Polymer eine Tg von 82°, eine Tₖ von 178° eine T^{S} von 242° sowie einen Phosphorgehalt von 0,6 % aufweist. Die aus dem Polymer gesponnenen Fasern besitzen folgende Eigenschaften:
Reißkraft: 32 cN/tex
Reißdehnung: 26,2 %
Reißkraft nach Hydrolyse: 32 cN/tex
rel. Viskosität nach Hydrolyse: 1,75
Knickbruchtourenzahl: 2750
Brenntest: M1

Die Gegenüberstellung der erfindungsgemäßen Polyesterfaser und der Polyesterfasern der Vergleichsbeispiele zeigt, daß sich bei der Hydrolysebehandlung der Zusatz von TES in einer Abnahme der Reißfestgkeiten von ca. 10 % und der rel. Viskositäten von über 0,2 bemerkbar macht, während ohne TES die Reißfestigkeiten praktisch unbeeinflußt bleiben und die rel. Viskositäten um weniger als 0,1 abnehmen.

Die Werte der Knickbruchtourenzahl zeigen deutlich den Effekt der das Pillverhalten beeinflussenden Modifizierungskomponente TES. Während bei den Fasern der Vergleichsbespiele Werte von 2500 - 2700 gemessen werden - das sind Werte wie sie auch bei normalen Polyesterfasern gefunden werden - liegen die Werte der Knickbruchtourenzahl bei den erfindungsgemäß modifizierten Fasern im Bereich von 430 - 750, d.h. in einem Bereich der für pillarme Fasern charakteristisch ist.

## Patentansprüche

1. Pillarmer und schwer entflammbarer, linearer, faserbildender Polyester, aus Dicarbonsäure- und Diolkomponenten, dadurch gekennzeichnet, daß er in seiner Polymerkette Modifizierungsbausteine enthält, die durch Umesterungs- oder Veresterungsreaktion aus Verbindungen der Formeln I und/oder II und/oder III entstehen, 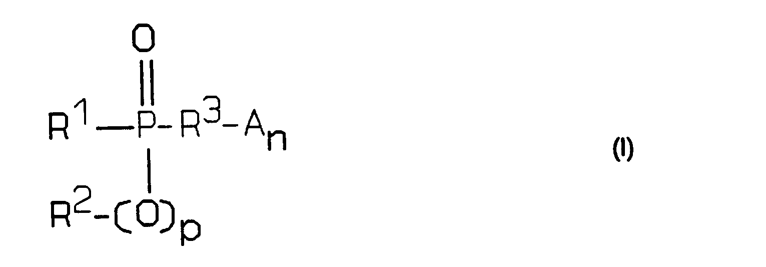 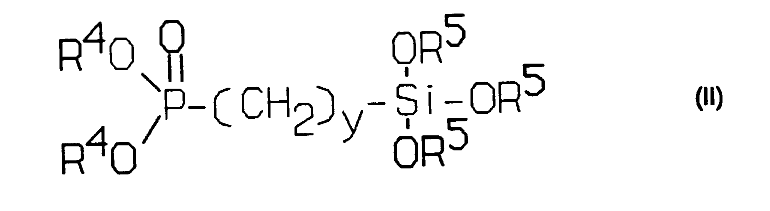 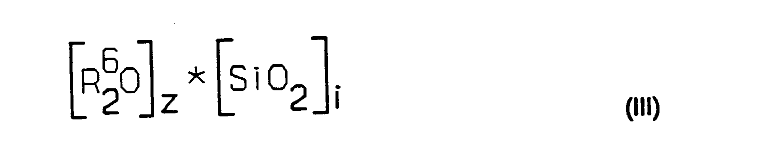 worin R¹ und R² gleich oder verschieden und jeweils einen einbindigen aliphatischen, araliphatischen oder aromatischen Kohlenwasserstoffrest mit 1 bis 12 C-Atomen oder
R¹ und R² gemeinsam einen zweibindigen aliphatischen, araliphatischen oder aromatischen Rest bedeuten,
R³ für einen (n + 1)-valenten organischen Rest steht,
A steht für eine zur Esterbildung befähigte Gruppe, n für eine der ganzen Zahlen 1 bis 3 und p für 0 oder 1.
R⁴ und R⁵ gleich oder verschieden sind und jeweils Wasserstoff oder einen einbindigen aliphatischen, araliphatischen oder aromatischen Kohlenwasserstoffrest mit 1 bis 12 C-Atomen bedeuten,
y eine ganze Zahl von 1 bis 10 ist,
R⁶ Wasserstoff oder einen einbindigen aliphatischen, araliphatischen oder aromatischen Kohlenwasserstoffrest mit 1 bis 12 C-Atomen bedeutet und der Index z 0 oder eine ganze Zahl von 1 bis 2^{*}i und der Index i eine ausreichend kleine ganze Zahl ist.

2. Polyester gemäß Anspruch 1, dadurch gekennzeichnet, daß die Phosphorverbindungen entsprechend den Formeln I in solchen Mengen eingesetzt werden, daß die Polyester einen Phosphorgehalt von etwa 0,1 bis 2,5 Gewichtsprozent aufweisen.

3. Polyester gemäß mindestens einem der Ansprüche 1 und 2, dadurch gekennzeichnet, daß die Menge der Siliciumverbindungen entspr. Formeln 111 oder IV so bemessen ist, daß die linearen Polyester 0,01 bis 0,5 Gewichtsprozent Si enthalten.

4. Polyester gemäß mindestens einem der Ansprüche 1 bis 3, dadurch gekennzeichnet, daß seine Kette überwiegend aus Bausteinen, die sich von aromatischen Dicarbonsäuren und von aliphatischen Diolen ableiten, besteht und zu maximal 20 Mol% aus Dicarbonsäureeinheiten und Glycoleinheiten, die als sogenannte Modifizierungsmittel wirken, und die es dem Fachmann gestatten, die physikalischen und chemischen Eigenschaften der hergestellten Filamente gezielt zu beeinflussen.

5. Polyester gemäß mindestens einem der Ansprüche 1 bis 4, dadurch gekennzeichnet, daß seine Polymerketten aus
0 bis 100 Mol.-% Baugruppen der Formel IV 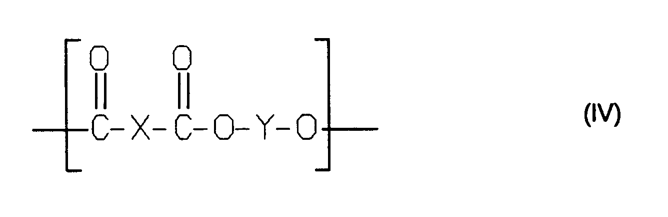
und 100 bis 0 Mol.-% Baugruppen der Formel V 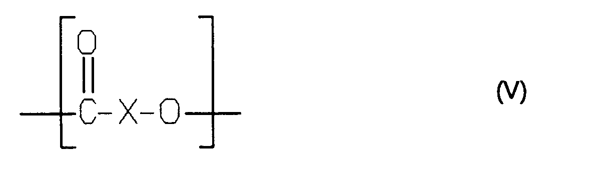 aufgebaut sind, worin
X zu mehr als 80 Mol.-% aromatische Reste mit 5 bis 16, vorzugsweise 6 bis 12 C-Atomen und maximal 20 Mol.-% aliphatische Reste mit 4 bis 10 Kohlenstoffatomen, vorzugsweise 6 bis 8 Kohlenstoffatomen,
Y zu mindestens 80 Mol.-% Alkylen- oder Polymethylengruppen mit 2 bis 4 Kohlenstoffatomen oder Cycloalkan- oder Dimethylen-cycloalkangruppen mit 6 bis 10 C-Atomen und
zu maximal 20 Mol.-% geradkettiges oder verzweigtes Alkandiyl mit 4 bis 16, vorzugsweise 4 bis 8, C-Atomen oder
Reste der Formel -(C₂H₄-0)ₘ-C₂H₄-, worin m eine ganze Zahl von 1 bis 40 bedeutet, wobei m = 1 oder 2 für Anteile bis zu 20 Mol.-% bevorzugt sind und Gruppen mit m = 10 bis 40 vorzugsweise nur in Anteilen von unter 5 Mol.-% vorhanden sind, oder
ein Rest der Formel -(CH₂)q-Q-(CH₂)q-, worin
Q für O oder S (ein Sauerstoff- oder Schwefelatom) steht, wobei q eine ganze Zahl von 2 bis 8 bedeutet oder
Q Cycloalkan-diyl, oder ein ein- oder zweikerniger kondensierter oder nicht kondensierter aromatischer Rest, insbesondere Phenylen oder eine Rest der unten angegebenen Formel VI ist, wobei q eine ganze Zahl von 0 bis 8 ist.

6. Polyester gemäß mindestens einem der Ansprüche 1 bis 5, dadurch gekennzeichnet, daß die Dicarbonsäureeinheiten im wesentlichen Einheiten der Terephthalsäure und die Dioleinheiten im wesentlichen Einheiten des Ethylenglykols sind.

7. Verfahren zur Herstellung der linearen faserbildenden Polyester des Anspruchs 1, wobei in an sich bekannter Weise Dicarbonsäuren oder Hydroxycarbonsäuren der Formeln IVa oder Va 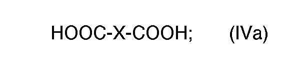 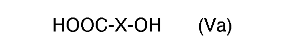 worin X die oben angegebenen Bedeutungen hat, oder deren niedere (vor allem C 1 bis C 4-) Alkylester mit Diolen der Formel IVb 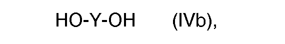 unter Zusatz von Verbindungen der oben angegebenen Verbindungen der Formeln I und/oder 111 und/oder 11 durch Direktveresterung bzw. Umesterung zur Reaktion gebracht und das Produkt dann auf bekannte Weise polykondensiert.

8. Verfahren gemäß Anspruch 7, dadurch gekennzeichnet, daß die Phophorverbindungen der Formel I bevorzugt als freie Dicarbonsäuren und bei dem Umesterungsverfahren nach der Umesterung eingesetzt werden.

9. Verfahren gemäß mindestens einem der Ansprüche 7 und 8, dadurch gekennzeichnet, daß die Siliciumverbindungen der Formeln 11 oder III bei dem Veresterungsverfahren bevorzugt während des Abtriebs von überschüssigem Glykol zugesetzt werden.

10. Formkörper, dadurch gekennzeichnet, daß sie aus den linearen Polyestern gemäß Anspruch 1 durch Verpressen, Spritzguß oder Extrusion hergestellt sind.

11. Fasern, dadurch gekennzeichnet, daß sie aus den linearen Polyestern gemäß Anspruch 1 durch Extrusion hergestellt sind.

12. Textile Artikel, dadurch gekennzeichnet, daß sie aus den Fasern des Anspruchs 11 hergestellt sind.
